# EUROPEAN PATENT SPECIFICATION

(11) **EP 2 025 103 B1**
(45) Date of publication and mention of the grant of the patent: **24.08.2016**
(21) Application number: 07797806.2
(22) Date of filing: 25.05.2007
(51) Int. Cl.: H04L 12/18, H04W 52/02, H04W 72/00

(54) **RELIABLE MULTICAST IN A NETWORK HAVING A POWER SAVING PROTOCOL**
ZUVERLÄSSIGES MULTICAST IN EINEM NETZWERK MIT EINEM STROMSPARPROTOKOLL
MULTIDIFFUSION FIABLE DANS UN RÉSEAU AYANT UN PROTOCOLE D'ÉCONOMIE D'ÉNERGIE

(30) Priority: 26.05.2006 US 441661
(43) Date of publication of application: 18.02.2009
(73) Proprietor: Intel Corporation, Santa Clara, CA 95054 (US)
(72) Inventor: STEPHENS, Adrian, Cottenham, Cambridgeshire CB4 8TA (GB)
(74) Representative: Hufton, David Alan
(86) International application number: PCT/US2007/069814
(87) International publication number: WO 2007/140343

(56) References cited:
- EP-A2- 1 992 096
- WO-A1-2004/017540
- WO-A1-2005/034397
- WO-A1-2005/096548
- US-A1- 2005 114 537
- US-A1- 2005 135 317
- US-A1- 2005 243 751
- US-A1- 2005 276 237

## Description

### FIELD OF THE INVENTION

The invention relates to the field of networks such as local area networks (LANs).

### PRIOR ART AND RELATED ART

Multicasting is an efficient method of communicating data to a group since, for example, a single transmission of data to multiple stations is possible.

In some wireless network protocols, stations are assigned times for downlink and uplink transmissions to reduce their power consumption. This creates a problem for multicasting since all multicast addressees may not be listening at the same time to receive multicast data.

One proposed protocol embodying this power saving feature is the proposed standard IEEE P802.11n/D1.0 (March 2006). This proposed standard employs a traffic control frame which defines a service interval used by the power save multi-poll (PSMP) transmitter and PSMP receivers.

WO2005/096548 describes a method of multicasting in a wireless network that includes one or more client devices sending requests for delivery of application data packets to a network access station. The requests may include a multicast address and QoS attributes.

WO2004/017540 relates to a multimedia service of a UMTS, wherein when a MBMS service is provided, a time at which each data for MBMS service is transmitted is designated and the corresponding time information transmitted to a terminal group that desires to receive the MCMS service.

EP 1992096 relates to multicast group address signalling using a MAC header for power save delivery in a wireless network.
Document WO 2005/034397 discloses a 3rd generation (3G) mobile communication system Multimedia Broadcast Multicast Service (MBMS) implementation in which a random access uplink channel is used for transmission of acknowledgement messages for received data.

### SUMMARY

There is provided a method in a wireless network as set out in claim 1.

### BRIEF DESCRIPTION OF THE DRAWINGS

Figure 1 illustrates a traffic specification frame as proposed for the 802.11n standard.
Figure 2 illustrates a modified traffic specification frame, as modified for multicasting.
Figure 3 is a flow diagram illustrating steps occurring at an access point (AP) to support multicasting in the power saving protocol.
Figure 4 illustrates a PSMP frame and the ensuing downlink and uplink transmissions for a multicast operation.

### DETAILED DESCRIPTION

A method for implementing a reliable multicast in a network protocol employing power saving techniques with scheduled transmissions and/or reception is described. The following description is focused on the proposed standard IEEE 802.11n. It will be apparent to one skilled in the art, that the teachings of the present invention may used in other networks.

In the context of the proposed IEEE 801.11n/D1.0 (March 2006) standard (hereinafter the "Standard"), two parts of the Standard are modified to achieve a reliable multicast. First, the traffic specification frame (TSPEC) is modified to invoke the multicast flow. Secondly, the power save multi-poll (PSMP) sequence flow is changed to ensure that a station (STA) receiving the multicast data is awake to receive it, and further that it transmits an acknowledgement in its scheduled uplink time.

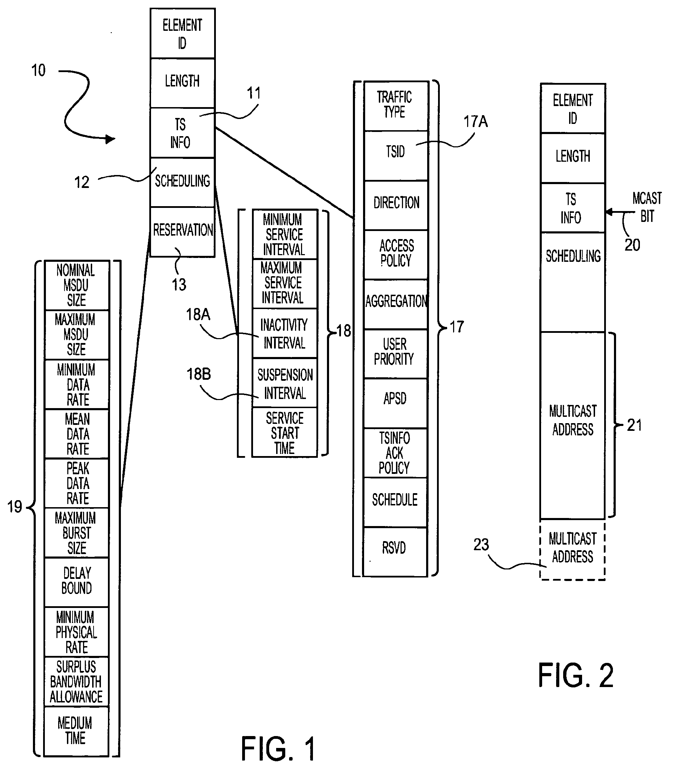

Referring first to Figure 1, the TSPEC frame 10 for the Standard is shown with its major parameters, specifically element ID, length, traffic stream (TS) info 11, scheduling 12, and reservation 13. Detailed fields of the TS information parameters (fields 17), the scheduling parameters 12 (fields 18), and the reservation parameters 13 (fields 19) are also shown. In general, the TSPEC frame allocates resources of the access point (AP) by modifying the AP's schedules. The scheduling parameter 12 controls the PSMP scheduling by defining a service interval, as indicated by the fields 18. The reservation parameter 13, as indicated by its fields 19, reserve time for the downlink transmissions (DLT) and uplink transmissions (ULT).

The TSPEC frame of Figure 1 is modified, as indicated in Figure 2, so that the frame is recast for reliably multicasting. First, to indicate the multicast function, in one embodiment, a flag is set by changing the state of a reserved bit to signify multicast flow. As indicated by arrow 20, a reserve bit in the TS information field is reset (e.g. bit 17). Other mechanisms within the TSPEC may be used to indicate the reliable multicast such as a combination of bits which are recognized as invoking multicasting.

Once the multicast flag is set, fields within the TSPEC frame can be redefined to carry a multicast address such as a 6-byte address. For example, the Inactive Interval field 18A and the Suspension Interval field 18B, both of which are four byte fields, may be used for this purpose. These are indicated as the multicast address 21 in Figure 2. Alternatively, the TSPEC frame can be extended as indicated by the extension 23 of Figure 2, to include the multicast address.

In still another embodiment, a shortened version of the multicast address may be assigned. One of the fields from Figure 1 may be used to carry this shortened version of the multicast address or, alternatively, the shortened version of the multicast address can be added to the frame of Figure 2 in lieu of adding the entire multicast address 23. Alternatively, the AP may assign an unused association ID (AID) to represent the multicast address.

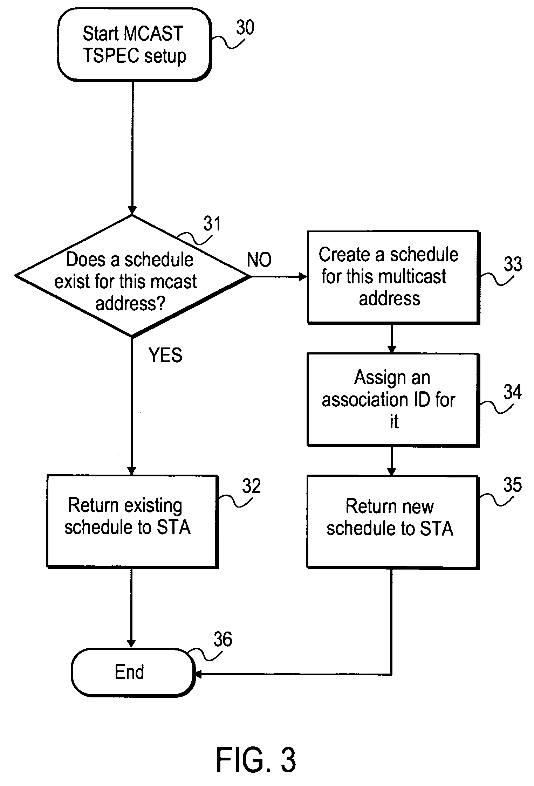

The multicast setup process is illustrated in Figure 3. At step 30, a STA sets the flag, such as setting bit 20 of Figure 2, and provides the multicast address to the AP. Next, as indicated at step 31, the AP upon receiving the TSPEC frame, determines if it has already stored a schedule for the particular multicast address. If it does, as indicated at step 32, it can return the existing schedule to the STA. On the other hand, if it does not have a schedule, it creates a schedule for the address, as indicated at step 33 which it stores for later use. It may, as indicated at step 34, assign a shortened version of the address by the assignment of an AID. Then, the AP returns the new schedule to the requesting station, as indicated at step 35.

The AP also creates a block acknowledge (BA) agreement by sending an ADDBA frame to the STA using the TSPEC ID (TSID) 17A of Figure 1, initially selected by the STA. This is a departure from the existing Standard in that this agreement is associated with the multicast TSID, otherwise no changes are made to the Standard's BA setup process.

The stored multicast schedule for a multicast address is deleted, as indicated at step 36, on any one of several occurrences such as being timed-out for lack of use, BA time-out or expressly deleted by the STA. On this occurrence, the AP removes the schedule for that particular multicast address, and if an AID has been assigned, it may be reused.

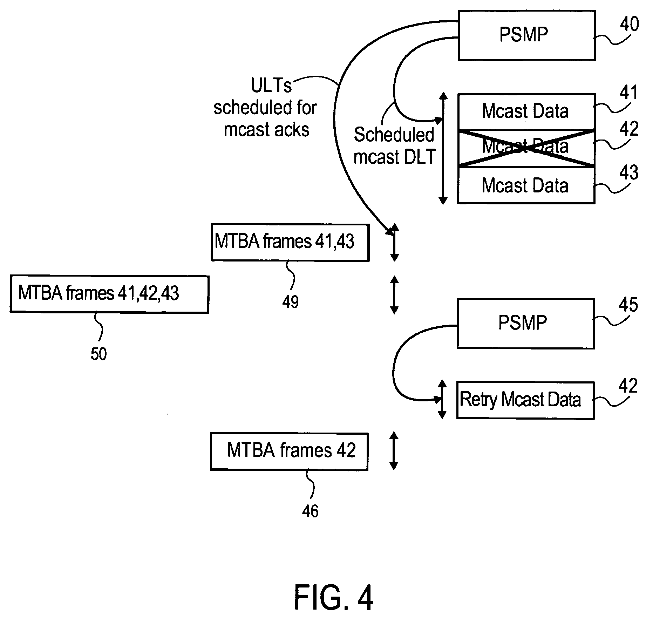

Referring now to Figure 4, a PSMP frame 40 is illustrated. In general, these MAC control frames provide a time schedule used by the PSMP transmitters and receivers. In the Standard, the schedule begins immediately following the transmission of the frame 40, and like frames. For the multicast operation, this frame is modified to contain the multicast address. For instance, the multicast address may be placed in the receiver address field, thus, the PSMP serves only a single multicast address. Alternately, a broadcast AID field may be used in a scheduled downlink. Still alternatively, an assigned AID is used for the multicast address for the downlink transmission.

The PSMP field 40 includes the downlink transmission (DLT) times for the multicast transmission as well as the uplink transmission (ULT) for the acknowledgements. Each STA checks the PSMP frame for its respective multicast groups and determines the appropriate DLT(s). This ensures that it will be awake to receive during the appropriate DLTs.

As indicated in Figure 4, three blocks 41, 42 and 43 are transmitted following the PSMP frame 40, as determined by the DLT schedule for a particular multicast address. One of the blocks, 42, includes an "X" to indicate that block 42 was not received by all the multicast addressees.

During the ULT, the multiple traffic ID block acknowledgements (MTBA) frames are returned by the STAs, as indicated by frame 49 and 50. The frame 49 indicates acknowledgement for the blocks 41 and 43, while the frame 50 from another STA indicates acknowledgements of all three frames 41, 42 and 43. Following the subsequent PSMP frame 45, a retry of the multicast data (block 42) is illustrated with another acknowledgement frame 46 indicating an acknowledgement for the block 42.

Thus, a reliable multicast protocol has been described compatible with the Standard.

## Claims

1. A multicast method for a wireless network comprising:
notifying an access point of a multicast request; and scheduling a downlink time for the transmission of multicast data, wherein the notifying comprises modifying a traffic specification, TSPEC, frame (10) of IEEE 802.11n-compliant traffic to indicate a multicast function and redefining the TSPEC frame (10) included in the multicast request to contain a multicast address (21, 23); and
multicasting the data from the access point during the downlink time to multicast addressees;
the method **characterized by** further comprising:
changing a power save multi-poll, PSMP, sequence frame (40) of the IEEE 802.11n-compliant traffic to ensure that a station receiving the multicast data is awake to receive the multicast data and that the station transmits an acknowledgement in its scheduled uplink time, wherein the power save multi-poll, PSMP, sequence frame (40 is changed to include downlink transmission times for multicast transmission and uplink transmission times for acknowledgements;
wherein the modifying and redefining the TSPEC frame (40) comprise:
setting a flag by changing to state of a reserved bit to signal multicast flow;
assigning a shortened version of the multicast address (21, 23); and
using the shortened version of the multicast address (21, 23) in the TSPEC frame (10) as any one of:
a field (21) in the TSPEC frame (10);
an address appended to the frame;
an unused association ID, AID; and
wherein the PSMP frame (40) is modified to contain the multicast address (21, 23) received via the TSPEC frame (10).

2. The method of claim 1, wherein each multicast addressee acknowledges receipt of the data.

3. The method defined by claim 1, wherein the access point stores a schedule for the multicast request which is used for later requests for the same multicast address (21, 23).

4. The method defined by claim 1, wherein notifying an access point of a multicast request includes the use of the multicast address (21, 23).

5. The method defined by claim 1, wherein the downlink time is contained in a power saver multi-poll frame (40).

6. The method defined by claim 1, including storing a schedule for the multicast address for a predetermined period for use with other requests for the same multicast address (21, 23).

7. The method defined by claim 1, including establishing a block acknowledgement, BA agreement for the multicasting by sending an ADDBA frame to the multicast addressees.

8. The method of claim 7, wherein the ADDBA frame is sent using a TSPEC ID of the TSPEC frame (10)

9. The method defined by claim 1, including the steps of: storing a schedule; and checking to determine if a schedule is stored corresponding to the multicast address prior to scheduling.

10. The method defined by claim 10, including deleting the schedule after a determined period.

## Patentansprüche

1. Gruppensendeverfahren für ein drahtloses Netzwerk, das Folgendes umfasst:
Benachrichtigen eines Zugangspunkts über eine Gruppensendeanfrage; und Einplanen einer Abwärtsstreckenzeit für die Übertragung von Gruppensendedaten, wobei das Benachrichtigen das Modifizieren eines Datenverkehrsspezifikations-Rahmens bzw. TSPEC-Rahmens (10) eines IEEE 802.11n-kompatiblen Datenverkehrs, um eine Gruppensendefunktion anzuzeigen, und das Neudefinieren des TSPEC-Rahmens (10), der in der Gruppensendeanfrage enthalten ist, eine Gruppensendeadresse (21, 23) zu enthalten, umfasst; und Gruppensenden der Daten von dem Zugangspunkt, während der Abwärtsstreckenzeit, an Gruppensendeadressaten;
wobei das Verfahren **dadurch gekennzeichnet ist, dass** es ferner Folgendes umfasst:
Ändern eines Energiespar-Gruppenabfrage-Sequenzrahmens bzw. PSMP-Sequenzrahmens (40) des IEEE 802.11n-kompatiblen Datenverkehrs, um zu gewährleisten, dass eine Station, die die Gruppensendeverkehrsdaten empfängt, wach ist, um die Gruppensendeverkehrsdaten zu empfangen, und dass die Station in ihrer geplanten Aufwärtsstreckenzeit eine Bestätigung überträgt, wobei der Energiespar-Gruppenabfrage-Sequenzrahmen bzw. PSMP-Sequenzrahmen (40) geändert wird, um Abwärtsstreckenübertragungszeiten für Gruppensendeübertragung und Aufwärtsstreckenübertragungszeiten für Bestätigungen zu beinhalten;
wobei das Modifizieren und das Neudefinieren des TSPEC-Rahmens (40) Folgendes umfasst:
Setzen eines Flags durch Ändern eines Zustands eines reservierten Bits auf Gruppensendeverkehrsfluss;
Zuweisen einer verkürzten Version der Gruppensendeadresse (21, 23); und
Verwenden der gekürzten Version der Gruppensendeadresse (21, 23) in dem TSPEC-Rahmen (10) als eine der Folgenden:
ein Feld (21) in dem TPSEC-Rahmen (10);
eine Adresse, die an den Rahmen angehängt ist;
eine unbenutze Assoziations-ID bzw. AID; und
wobei der PSMP-Rahmen (40) modifiziert wird, um die über den TSPEC-Rahmen (10) empfangene Gruppensendeadresse (21, 23) zu enthalten.

2. Verfahren nach Anspruch 1, wobei jeder Gruppensendeadressat Empfang der Daten bestätigt.

3. Verfahren nach Anspruch 1, wobei der Zugangspunkt einen Zeitplan für die Gruppensendeanfrage speichert, der für spätere Anfragen für dieselbe Gruppensendeadresse (21, 23) verwendet wird.

4. Verfahren nach Anspruch 1, wobei das Benachrichtigen eines Zugangspunkts über eine Gruppensendeanfrage das Verwenden der Gruppensendeadresse (21, 23) beinhaltet.

5. Verfahren nach Anspruch 1, wobei die Abwärtsstreckenzeit in einem Energiespar-Gruppenabfrage-Rahmen (40) enthalten ist.

6. Verfahren nach Anspruch 1, das das Speichern eines Zeitplans für die Gruppensendeadresse für einen vorherbestimmten Zeitraum zur Verwendung mit anderen Anfragen für dieselbe Gruppensendeadresse (21, 23) beinhaltet.

7. Verfahren nach Anspruch 1, das das Erstellen einer Blockbestätigungs-Vereinbarung bzw. BA-Vereinbarung, durch Senden eines ADDBA-Rahmens an die Gruppensendeadressaten, für das Gruppensenden beinhaltet.

8. Verfahren nach Anspruch 7, wobei der ADDBA-Rahmen unter Verwendung einer TSPEC-ID des TSPEC-Rahmens (10) gesendet wird.

9. Verfahren nach Anspruch 1, das die folgenden Schritte beinhaltet: Speichern eines Zeitplans und Überprüfen, um zu bestimmen, ob ein Zeitplan gespeichert ist, der der Gruppensendeadresse vor dem Zeitplanen entspricht.

10. Verfahren nach Anspruch 10, das das Löschen des Zeitplans nach einer vorherbestimmten Zeitdauer beinhaltet.

## Revendications

1. Procédé de multidiffusion destiné à un réseau sans fil, comprenant les étapes consistant à :
informer un point d'accès d'une demande de multidiffusion ; et planifier un temps de liaison descendante pour l'émission des données de multidiffusion, l'action d'informer comprenant le fait de modifier une trame de spécification de trafic, TSPEC, (10) d'un trafic selon l'IEEE 802.11n pour indiquer une fonction de multidiffusion et redéfinir la trame TSPEC (10) contenue dans la demande de multidiffusion pour faire qu'elle contienne une adresse de multidiffusion (21, 23) ; et
envoyer les données en multidiffusion depuis le point d'accès durant le temps de liaison descendante, à destination de destinataires de la multidiffusion ;
le procédé étant **caractérisé en ce qu'**il comprend également l'étape consistant à :
modifier une trame de séquence de scrutation multiple d'économie d'énergie, PSMP, (40) du trafic selon l'IEEE 802.11n pour garantir qu'une station recevant les données de multidiffusion soit réveillée pour recevoir les données de multidiffusion et que la station émette un accusé de réception durant son temps de liaison montante planifié, la trame de séquence de scrutation multiple d'économie d'énergie, PSMP, (40) étant modifiée pour faire qu'elle contienne des temps d'émission de liaison descendante pour l'émission de multidiffusion et des temps d'émission de liaison montante pour les accusés de réception ;
l'action de modifier et de redéfinir la trame TSPEC (40) comprenant les étapes consistant à :
positionner un indicateur en changeant l'état d'un bit réservé pour signaler le flux de multidiffusion ;
attribuer une version raccourcie de l'adresse de multidiffusion (21, 23) ; et
utiliser la version raccourcie de l'adresse de multidiffusion (21, 23) dans la trame TSPEC (10) sous l'une quelconque des formes suivantes :
un champ (21) de la trame TSPEC (10) ;
une adresse annexée à la trame ;
un ID d'association, AID, inutilisé ; et
la trame PSMP (40) étant modifiée pour contenir l'adresse de multidiffusion (21, 23) reçue par l'intermédiaire de la trame TSPEC (10).

2. Procédé selon la revendication 1, dans lequel chaque destinataire de la multidiffusion émet un accusé de réception des données.

3. Procédé selon la revendication 1, dans lequel le point d'accès stocke un calendrier concernant la demande de multidiffusion, qui est utilisé pour les demandes ultérieures concernant la même adresse de multidiffusion (21, 23).

4. Procédé selon la revendication 1, dans lequel l'action d'informer un point d'accès d'une demande de multidiffusion comprend l'utilisation de l'adresse de multidiffusion (21, 23).

5. Procédé selon la revendication 1, dans lequel le temps de liaison descendante est contenu dans une trame de séquence de scrutation multiple d'économie d'énergie (40).

6. Procédé selon la revendication 1, comprenant l'étape consistant à stocker un calendrier concernant l'adresse de multidiffusion pendant une période prédéterminée, à utiliser avec les autres demandes concernant la même adresse de multidiffusion (21, 23).

7. Procédé selon la revendication 1, comprenant l'étape consistant à établir un accord d'accusé de réception de bloc, BA, pour la multidiffusion en envoyant une trame ADDBA aux destinataires de la multidiffusion.

8. Procédé selon la revendication 7, dans lequel la trame ADDBA est envoyée à l'aide d'un ID de TSPEC de la trame TSPEC (10).

9. Procédé selon la revendication 1, comprenant les étapes consistant à : stocker un calendrier ; et effectuer des vérifications permettant de déterminer, avant la planification, si un calendrier correspondant à l'adresse de multidiffusion est stocké.

10. Procédé selon la revendication 10, comprenant l'étape consistant à supprimer le calendrier au bout d'une période prédéterminée.
